# DEMANDE DE BREVET EUROPEEN

(11) **EP 0 936 044 A1**
(43) Date de publication de la demande: **18.08.1999**
(21) Numéro de dépôt: 99100760.0
(22) Date de dépôt: 16.01.1999
(51) Int. Cl.: B29C 45/14, A63C 17/00

(54) **Procédé de fabrication d'un élément rigide de structure d'un article de sport**

(30) Priorité: 10.02.1998 FR 9801868
(71) Demandeur: Salomon S.A., 74370 Metz-Tessy (FR)
(72) Inventeur: Bosse, Ivan, 74000 Annecy (FR); De Marchi, Jean-Louis, 74410 Duingt (FR)

(57) **Abrégé**

L'invention concerne un procédé de fabrication d'un élément rigide de construction d'un article de sport comprenant un corps (2) en matière plastique et au moins un insert (3) lié au corps en matière plastique ayant une partie visible (36) extérieurement et une partie de liaison (30) avec ledit corps, caractérisé en ce qu'il comprend les étapes suivantes:
positionner l'insert (3) dans un moule (4),
déformer au moins une portion (34) de la partie visible (36) de l'insert par injection sous pression dans le moule d'une matière plastique et en même temps, réaliser la liaison de l'insert (3) avec le corps (2) par surmoulage de la partie de liaison (30) de l'insert.

Par un tel procédé, on peut réaliser des éléments de structure présentant des caractéristiques mécaniques et/ou esthétiques améliorées tout en réduisant le nombre d'étapes de fabrication nécessaire par rapport à des procédés connus traditionnels.

## Description

L'invention se rapporte à un procédé de fabrication d'un élément rigide de structure d'un article de sport tel qu'un patin à glace ou à roulettes, une fixation de ski ou de snowboard, et autres articles de sport comprenant des parties rigides.

Par élément de structure, il faut entendre toute partie recevant et transmettant des contraintes mécaniques importantes telles que des efforts de torsion et de flexion.

L'invention trouve une application avantageuse pour la construction d'un châssis pour les patins, notamment les patins à roues en ligne ou à glace.

Le châssis est destiné à assurer la liaison entre le pied du patineur et le ou les organes de glisse proprement dits; à savoir des roues ou roulettes ou une lame de glace.

Le châssis comprend généralement des surfaces d'appui aptes à recevoir une chaussure et deux flasques latéraux sensiblement parallèles orientés longitudinalement; les surfaces d'appuis formant des ponts transversaux reliant les deux flasques latéraux.

Le châssis doit par ailleurs présenter des caractéristiques mécaniques suffisantes pour résister aux efforts de flexion et de torsion qui sont appliqués par la patineur. Un bon compromis rigidité /flexibilité est recherché pour assurer à la fois une bonne transmission des efforts mais aussi assurer un certain amortissement des chocs et des vibrations. Enfin, le châssis doit rester suffisamment léger pour réduire la fatigue du patineur.

Les techniques de fabrication de châssis connues actuellement ne permettent pas de satisfaire toutes ces exigences tout en conservant un coût de fabrication raisonnable.

Il est connu de fabriquer un châssis à partir d'une tôle par pliage de celle-ci comme décrit dans le brevet DE 1 033 569. Un tel principe de fabrication, certes peu coûteux, ne permet pas de fabriquer des châssis de grande résistance mécanique sauf à augmenter de façon importante l'épaisseur de la tôle et donc son poids et encore moins d'obtenir une certaine flexibilité en des endroits choisis. Cette technique limite aussi les choix de différenciation esthétiques et les effets de design.

Une autre technique couramment utilisée consiste à réaliser les châssis entièrement par moulage à partir de matériaux synthétiques ou métalliques. Le moulage intégral offre l'avantage d'offrir des formes assez variées, mais présente par ailleurs certains inconvénients dont le principal est lié à la difficulté d'obtenir un compromis rigidité / flexibilité satisfaisant, sauf à prévoir des variations locales d'épaisseur qui conduisent à concevoir et fabriquer des moules compliqués et coûteux.

Dans ce domaine on connaît aussi des châssis réalisés en fibres composites. De tels châssis peuvent effectivement être réalisés dans quasiment toutes les formes possibles, mais ils sont coûteux à fabriquer car difficilement industrialisables. Ces châssis souffrent aussi d'un manque de souplesse d'où un manque de confort et ils sont aussi assez fragiles.

Il est aussi connu de réaliser un châssis à partir d'une barre profilée métallique extrudée et d'usiner cette barre à la forme finale souhaitée. Un tel procédé, décrit dans le brevet US 5 388 846 est aussi très coûteux à réaliser compte tenu du temps d'usinage nécessaire et de la quantité importante de matière utilisée pour réaliser une seule pièce.

La demande de brevet WO 97/33665 propose une solution consistant à réaliser un châssis composé de deux matériaux aux caractéristiques mécaniques différentes rapportés l'un sur l'autre.

La demande de brevet WO 97/33665 propose d'associer un élément de renfort surmoulé dans un flasque de châssis en matière plastique; l'élément de renfort pouvant être métallique obtenu par découpage puis emboutissage afin de lui conférer une forme de nervure d'allure générale arquée. Une telle invention permet de réaliser des châssis combinant astucieusement les matériaux et leur emplacement sur le châssis afin d'obtenir un meilleur compromis flexibilité / rigidité. La matière plastique qui constitue la majeure partie du châssis, dans ce cas, apporte de la flexibilité, de l'amortissement et de la légèreté alors que le métal employé localement complète la raideur et la résistance de l'ensemble. Elle participe aussi à l'enrichissement esthétique et à l'attrait général du produit.

Toutefois, le procédé d'obtention d'un tel produit comprend un nombre important d'étapes de fabrication et reste donc encore assez coûteux. En particulier, il faut prévoir des étapes préalables de découpe puis d'emboutissage de l'insert qui nécessitent des moyens de mise en oeuvre adaptés, notamment la production d'empreintes de moules. De plus, dans une construction comprenant un insert de chaque côté du châssis; lorsque l'insert a un profil longitudinal asymétrique, ce qui est souvent le cas pour des raisons techniques ou esthétiques, il faut prévoir des inserts droits et gauches différents. Bien entendu, ceci augmente les contraintes de gestion et les coûts de fabrication.

Le but de la présente invention est de palier à ces inconvénients en proposant un procédé de fabrication d'un élément de structure d'un article de sport de glisse, notamment d'une partie de châssis de patin, qui permet à la fois de conserver les avantages de l'art antérieur du document WO 97/33666, et à la fois, de réduire le nombre des étapes de fabrication et de limiter le nombre de pièces différentes à gérer réduisant ainsi les coûts de production et de la gestion liée à la production.

Pour cela le procédé comprend les étapes suivantes:
positionner un insert dans un moule,
injecter une matière plastique dans le moule sous haute pression de façon à obtenir une déformation 'in situ' de l'insert selon un profil désire.

De façon surprenante il a été découvert qu'il était possible de s'affranchir d'une étape préalable de formage de l'insert en réalisant la mise en forme directement dans le moule par la pression exercée par la matière plastique lors de l'injection.

Selon une caractéristique avantageuse de l'invention, on dispose d'un insert ayant une configuration de départ plane. Ainsi, il est possible de réduire le nombre de pièces utilisées, comme par exemple, pour les pièces droites et gauches.

L'invention peut aussi être définie comme étant un procédé de fabrication d'un élément rigide de construction d'un article de sport de glisse comprenant un corps en matière plastique et au moins un insert lié au corps en matière plastique ayant une partie visible extérieurement et une partie de liaison avec ledit corps, caractérisé en ce qu'il comprend les étapes suivantes:
positionner l'insert dans un moule,
déformer au moins une portion de la partie visible de l'insert par injection sous pression dans le moule d'une matière plastique et en même temps, réaliser la liaison de l'insert avec le corps par surmoulage de la partie de liaison de l'insert.

L'invention ainsi définie présente de nombreux avantages par rapport à l'état de l'art. L'invention permet de réaliser un élément multi-pièces au cours d'une seule opération où l'on obtient la mise en forme et la liaison des pièces entre elles au cours d'une seule opération conduisant à l'obtention d'un assemblage à la fois simple, économique et présentant des caractéristiques mécaniques et esthétiques désirées.

D'autres caractéristiques et avantages de l'invention ressortiront de la description détaillée des figures dans lesquelles:
la figure 1 illustre une vue de face d'un élément de châssis pour un patin obtenu selon le procédé de l'invention;
la figure 2 est un vue en coupe de l'élément de la figure 1 selon la coupe 2-2;
la figure 3 illustre une vue partielle en coupe d'une disposition de moule avant l'opération d'injection;
la figure 4 illustre une vue partielle en coupe d'une disposition de moule après l'opération d'injection;
la figure 5 montre l'intérieur d'un moule en deux parties en position d'ouverture;
la figure 6 est une vue de face de l'insert avant déformation.

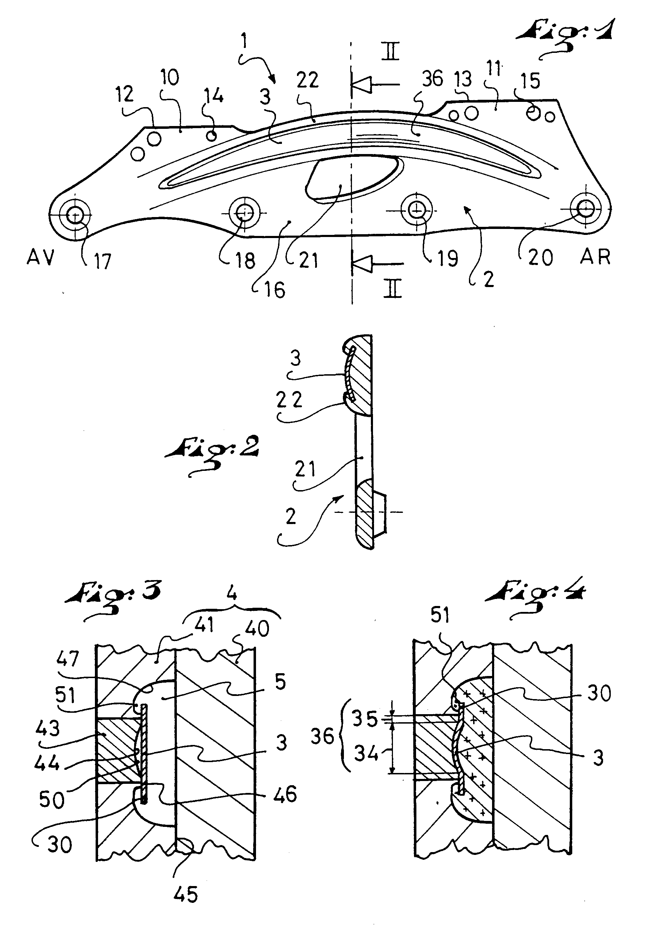

La figure 1 montre un élément 1 d'un châssis, en particulier pour un patin en ligne. Un tel élément est appelé usuellement 〈〈 flasque 〉〉. Le flasque est la partie latérale du châssis qui en comporte généralement deux, espacées transversalement et disposées de façon sensiblement parallèle. Les flasques sont reliés entre eux transversalement par des plates-formes, en général une à l'avant et une à l'arrière, destinées à supporter la chaussure du patineur. Le châssis a ainsi une section générale en U renversé au niveau des plates-formes. Les flasques peuvent être formés séparément comme dans le présent exemple puis assemblés aux plates-formes. Dans une alternative, le châssis peut être formé en une seule partie comprenant les flasques et les plates-formes. Le procédé de l'invention n'est limité à aucun de ces cas de figure.

Le flasque 1 représenté est formé d'un corps allongé 2 présentant une région avant (AV) et une région arrière (AR). Chaque région comprend une zone supérieure 10, 11 munie d'une arête sensiblement plane 12, 13 destinée à l'alignement transversal d'une plate-forme (non représentée). Les zones 10, 11 comprennent des trous de perçage 14, 15 destinés au passage d'une pluralité de moyens de fixation (vis, rivets,...) et de moyens de guidage des plates-formes.

Le flasque comprend aussi une région inférieure 16 munie de trous alignés 17, 18, 19, 20 pour le passage d'un dispositif d'assemblage de roues. Chaque trou représente la région de centrage d'une roue (non représentée). Moyennant quelques aménagements, un tel flasque pourrait aussi servir au montage d'une lame destinée à la pratique sur glace.

Le flasque comprend un évidement central 21 qui participe à l'allégement de la structure.

Le flasque comprend une nervure de renfort 22 s'étendant longitudinalement sur une partie de sa longueur et dont le profil est légèrement arqué; ce qui confère globalement une certaine raideur, tel un pont de renforcement reliant les deux zones supérieures 10, 11. Dans la nervure 22 est logé un insert 3 rigide de forme allongée et arquée. L'insert présente en section une forme bombée ou convexe qui confère à la nervure un aspect en relief dont les fonctions peuvent être mécaniques et/ou esthétiques.

Le corps 2 du flasque est avantageusement réalisé en matière plastique pour des raisons de flexibilité, de légèreté et de coût. L'insert, quant à lui, est avantageusement fait en matériau métallique ou plastique rigide renforcé ou non.

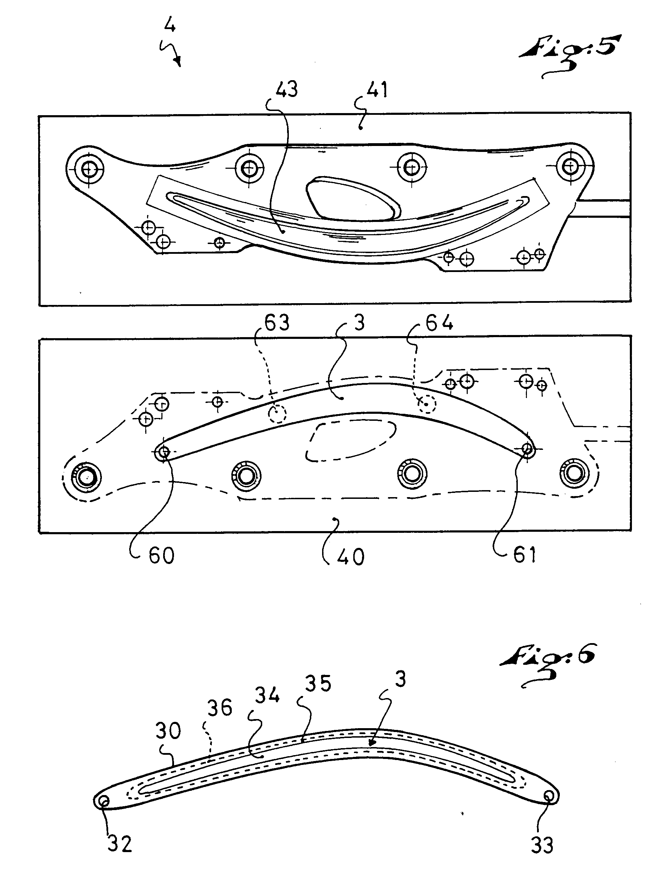

Le procédé selon l'invention est illustré aux figures 3 et 4 en détail. Le moule, en lui-même, comprend deux parties principales 40, 41 assemblées le long d'un plan de joint 45. L'assemblage des deux parties 40, 41 délimitent une cavité principale 5 à la forme du corps du flasque. Un insert 3 est donc maintenu en position dans le moule 4 et en appui au contact d'une partie de moule 43 présentant une contreforme 44. La partie de moule 4 peut être formée d'une pièce de moule séparable telle qu'elle figure sur les figures, ou au contraire faisant partie intégrante de la partie de moule 41. L'avantage de la partie séparable est qu'elle permet un remplacement à peu de frais de la contreforme.

Selon l'invention, une portion de la surface de l'insert s 'appuie sur la partie de moule 41 selon un contour 46 fermé qui délimite entre l'insert et ladite partie de moule une cavité secondaire 50 étanche au passage de la matière plastique. La portion de surface de l'insert en appui sur le moule peut constituer une portion de surface 35 plus ou moins importante de séparation entre la cavité secondaire 50 et le reste de la cavité 5. En effet, une des difficultés du procédé est de prévenir le passage de la matière plastique injectée dans la partie réservée pour la déformation de l'insert par un positionnement approprié de l'insert qui joue le rôle de barrière contre l'introduction de la matière plastique. Une fois fini, l'élément se distingue par une partie visible 36 d'insert dont la surface sera représentée par la surface intérieure 34 de l'insert en contact avec la contreforme 44 après déformation de l'insert, ainsi que de la portion de surface 35 correspondant au contour 46.

La figure 4 montre l'opération d'injection de la matière plastique sous haute pression. L'injection se fait pendant un cycle d'environ 40 secondes à une minute et demie, la matière plastique étant portée à une température à l'entrée du point d'injection de l'ordre de 250 à 260 °C sous une pression d'environ 500 à 700 bars, de préférence 600 bars. Puis, la pression est encore maintenue pendant 40 à 50 secondes à environ 500 bars sans ajout calorifique jusqu'à ce que la matière durcisse suffisamment pour que la pièce puisse être retirée du moule aux alentours des 70 à 90 °C, plus précisément 85 °C. En raison de la forte pression exercée, on constate que la matière plastique imprime une déformation de l'insert jusqu'à épouser la contreforme 44. Bien entendu, la capacité à déformer l'insert dépend de nombreux facteurs dont le facteur principal est la pression interne exercée par la matière plastique. D'autres facteurs sont davantage liés aux caractéristiques de l'insert; à savoir, l'épaisseur de l'insert ainsi que ses caractéristiques mécaniques. De bons résultats ont été obtenus avec des alliages d'aluminium ayant des caractéristiques mécaniques suivantes:
- Module de Young:: 72 Gpa;
- Dureté d'écrouissage:: H18;
- Résistance maximale:: 140-170 N/mm2;
- Résistance à 0.2 % de déformation (Rp0,2):: 135-155 N/mm2;
- Allongement maximal à la rupture (A) :: 3%.

Parmi les nombreux plastiques utilisables dans le cadre de l'invention, on peut citer à titre d'exemple non limitatif, les polyamides chargés ou non. Des essais concluants ont été obtenus avec du PA6 chargé de 30 % en fibres de verre.

De préférence, l'insert comprend des bords 30 qui s' étendent dans la cavité principale 5 au delà du contour fermé 46 qui forme avec la paroi du moule 47 des zones 51 réservées à l'introduction de la matière plastique de façon à obtenir l'immobilisation de l'insert par surmoulage de ces bords 30, qui constituent alors la partie de liaison de l'insert avec le corps du flasque. Ainsi, par une seule opération d'injection, on obtient à la fois la mise en forme de l'insert à la forme souhaitée et sa fixation sur le reste du flasque.

La figure 5 illustre la préparation du moule 4 avant fermeture. L'insert 3 est positionné dans la partie 41 du moule à l'aide de moyens de positionnement et d'appui. Ces moyens peuvent être des éléments d'engagement rétractables 60, 61, de préférence localisés à chaque extrémité de l'insert. Les éléments d'engagement coopèrent avec des trous 32, 33 réalisés dans les extrémités de l'insert de façon à maintenir l'insert à distance du fond de la partie de moule 41. La pression d'injection est suffisante pour provoquer la rétraction des moyens d'engagement vers l'intérieur du moule avant solidification de la matière plastique.

D'autres moyens de positionnement et d'appui peuvent être des éléments d'entretoisement 63, 64, prévus sur la longueur de l'insert. Ces moyens peuvent être de simples broches rétractables montées sur ressort prenant appui sur la surface de l'insert dans la partie déformable de l'insert. Un rôle important de ces moyens de positionnement et d'appui 60, 61, 62, 63 est aussi de maintenir un appui sensiblement réparti sur toute la surface de l'insert selon le contour 46 contre la contreforme afin d'assurer l'étanchéité dans la cavité 50. Bien entendu, d'autres moyens de positionnement peuvent être envisagés comme, par exemple, des moyens magnétiques, d'adhésion, par aspiration, par dépression, par ventouse et par pesanteur, etc.

La figure 6 montre une vue de l'insert se présentant sous la forme d'une pièce rigide d'insert découpée selon un motif désiré. La partie visible après surmoulage partiel représente la partie 36 délimitée par la ligne pointillée. Les bords ou partie de liaison de l'insert représente la partie 30 figurant à l'extérieure de la ligne pointillée. La portion de surface 34 délimitée par la ligne continue représente la portion soumise à la déformation de l'insert.

L'insert est réalisé dans une feuille en matériaux relativement rigide telle qu'une feuille métallique ou une feuille en plastique renforcé ou non. Toutefois, la préférence est donnée à une feuille en tôle métallique, et plus particulièrement, une feuille d'aluminium ou en alliage d'aluminium. L'épaisseur d'une telle feuille est, de préférence comprise entre 0.2 et 1.5 mm.

Bien entendu, l'invention n'est pas limitée strictement au mode de réalisation décrit en référence aux figures mais elle inclut tout type de procédé couvert par la portée des revendications qui suivent.

## Revendications

1. Procédé de fabrication d'un élément rigide de structure d'un article de sport, notamment d'au moins une partie d'un châssis de patin, caractérisé en ce qu'il comprend les étapes suivantes:
positionner un insert (3) dans un moule (4),
injecter une matière plastique dans le moule sous haute pression de façon à obtenir une déformation 'in situ' de l'insert (3).

2. Procédé de fabrication selon la revendication 1, caractérisé en ce que l'insert (3) est maintenu en position dans le moule (4) dans une configuration de départ sensiblement plane.

3. Procédé de fabrication selon la revendication 1, caractérisé en ce que l'insert (3) est maintenu en position au contact d'une partie de moule (43) présentant une contreforme (44); l'insert étant ensuite déformé de façon permanente par la pression d'injection jusqu'à épouser la contreforme (44).

4. Procédé de fabrication selon la revendication 3, caractérisé en ce que l'insert (3) s'appuie sur ladite partie de moule (43) selon un contour fermé (46) de façon à délimiter entre eux une cavité étanche (50) au passage de la matière plastique injectée.

5. Procédé de fabrication selon la revendication 4, caractérisé en ce que l'insert (3) comprend des bords (30) s'étendant au delà du contour fermé (46) de façon à former avec la paroi (47) du moule des zones réservées à l'introduction de la matière plastique de façon à obtenir l'immobilisation de l'insert (3) par surmoulage des bords (30).

6. Procédé de fabrication selon la revendication 1, caractérisé en ce que l'insert (3) comprend une feuille métallique ou en plastique renforcé ou non.

7. Procédé de fabrication selon la revendication 6, caractérisé en ce que l'insert comprend une feuille d'aluminium ou d'alliage à base d'aluminium d'épaisseur comprise entre 0.2 et 1.5 mm.

8. Procédé de fabrication selon la revendication 3, caractérisé en ce que des moyens de positionnement et d'appui maintiennent l'insert en appui selon le contour fermé (46) sur la contreforme.

9. Procédé de fabrication selon la revendication 8, caractérisé en ce que les moyens de positionnement et d'appui comprennent des éléments d'engagement rétractables (60, 61) qui coopèrent avec des trous (32, 33) réalisés au travers de l'insert.

10. Procédé de fabrication selon la revendication 8, caractérisé en ce que les moyens de positionnement et d'appui comprennent des élément d'entretoisement (63, 64) formés de piges rétractables montées sur ressort qui prennent appui sur la partie déformable de l'insert.

11. Procédé de fabrication selon la revendication 8, caractérisé en ce que les moyens de positionnement comprennent des moyens choisis parmi des moyens magnétiques, d'adhésion, par aspiration, par dépression, par ventouse et par pesanteur.

12. Procédé de fabrication selon l'une quelconque des revendications précédentes, caractérisé en ce que l'élément rigide de structure concerne un flasque (1) d'un châssis de patin en ligne.

13. Procédé de fabrication d'un élément rigide de construction d'un article de sport comprenant un corps (2) en matière plastique et au moins un insert (3) lié au corps en matière plastique ayant une partie visible (36) extérieurement et une partie de liaison (30) avec ledit corps, caractérisé en ce qu'il comprend les étapes suivantes:
positionner l'insert (3) dans un moule (4),
déformer au moins une portion (34) de la partie visible (36) de l'insert par injection sous pression dans le moule d'une matière plastique et en même temps, réaliser la liaison de l'insert (3) avec le corps (2) par surmoulage de la partie de liaison (30) de l'insert.
